# EUROPÄISCHE PATENTSCHRIFT

(11) **EP 1 926 756 B1**
(45) Veröffentlichungstag und Bekanntmachung des Hinweises auf die Patenterteilung: **25.03.2015**
(21) Anmeldenummer: 06793088.3
(22) Anmeldetag: 31.08.2006
(51) Int. Cl.: C08F 2/38, B01J 19/00, B01J 19/24, B01J 19/26, C08F 2/01, C08F 2/42, C08F 220/06

(54) **POLYMERISATIONSVERFAHREN**
POLYMERIZATION METHOD
PROCEDE DE POLYMERISATION

(30) Priorität: 07.09.2005 DE 102005042607
(43) Veröffentlichungstag der Anmeldung: 04.06.2008
(73) Patentinhaber: BASF SE, 67056 Ludwigshafen (DE)
(72) Erfinder: WEISMANTEL, Matthias, 63637 Jossgrund (DE); FUNK, Rüdiger, 65527 Niedernhausen (DE); VAN ESBROECK, Dominicus, NL-4725 Sn Wouse Plantage (NL); POSSEMIERS, Karl, J., B-2900 Schoten (BE); DE KAEY, Ronny, B-2531 Vremde (BE); VAN MIERT, leo, B-2950 Kapellen (BE)
(86) Internationale Anmeldenummer: PCT/EP2006/065844
(87) Internationale Veröffentlichungsnummer: WO 2007/028748

(56) Entgegenhaltungen:
- EP-A1- 1 043 338
- EP-A2- 0 755 951
- WO-A1-03/095410
- WO-A1-2006/079631
- GB-A- 837 974
- GB-A- 2 175 591
- US-A- 4 331 787
- US-A- 4 402 914
- US-A1- 2004 110 914
- US-A1- 2004 242 826

## Beschreibung

Die vorliegende Erfindung betrifft ein Verfahren zur Herstellung wasserabsorbierender Polymerpartikel, umfassend die Inertisierung niedrig stabilisierter Monomerlösungen, sowie Vorrichtungen zur Durchführung des Verfahrens.

Wasserabsorbierende Polymere sind insbesondere Polymere aus (co)polymerisierten hydrophilen Monomeren. Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, wobei wasserabsorbierende Polymere auf Basis teilneutralisierter Acrylsäure bevorzugt werden. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben. Das bevorzugte Herstellungsverfahren ist die Lösungs- oder Gelpolymerisation. Bei dieser Technologie wird zunächst eine Monomermischung hergestellt, die diskontinuierlich neutralisiert und dann in einen Polymerisationsreaktor überführt wird, oder bereits im Polymerisationsreaktor vorgelegt wird. Im sich anschließenden diskontinuierlichen oder kontinuierlichen Verfahren erfolgt die Reaktion zum Polymergel, das im Falle einer gerührten Polymerisation bereits zerkleinert wird. Das Polymergel wird anschließend getrocknet, gemahlen und gesiebt und dann zur weiteren Oberflächenbehandlung transferiert.

Ein kontinuierliches Polymerisationsverfahren liegt beispielsweise der WO-A-01138402 zugrunde, wobei die wässrige Monomerlösung, zusammen mit dem Initiator und dem Inertgas kontinuierlich einem Mischkneter mit mindestens zwei achsparallel rotierenden Wellen zugeführt wird.

Kontinuierliche Gelpolymerisationen sind weiterhin bekannt aus WO-A-03/004237, WO-A-03/022896 und WO-A-01/016197.

Die Monomerlösung wird vor der Polymerisation von Restsauerstoff befreit, da Sauerstoff die radikalische Polymerisation inhibiert und die Polymerisationsreaktion beeinflußt. Eine weitestgehende Entfernung des gelösten Sauerstoffs vor und während der Polymerisation verhindert eine Inhibierung bzw. den Abbruch der Polymerisationsreaktion und ermöglicht insbesondere bei kontinuierlichen Herstellungsverfahren deren kontrollierten Start und Verlauf der Polymerisation und damit die Herstellung der gewünschten wasserabsorbierenden Polymere. Es hat deshalb in der Vergangenheit nicht an Versuchen gefehlt, Verfahren und/oder Vorrichtungen zur Verfügung zu stellen, mit denen der gelöste Sauerstoff aus den Monomerlösungen entfernt wird. Üblicherweise basieren diese Verfahren darauf, dass die Monomerlösung mit Inertgas gespült und die mit Sauerstoff angereicherte Gasphase abgetrennt wird. Bei der Inertisierung wird das Inertgas meist im Gegenstrom durch die Monomerlösung geleitet. Eine gute Durchmischung kann beispielsweise mit Düsen, statischen oder dynamischen Mischern oder Blasensäulen erzielt werden.

DE-A-199 38 574 beschreibt eine typische Blasensäule, wie sie zur Inertisierung von Monomerlösungen eingesetzt wird. Gemäß der Anmeldung wird die Inertisierung durch zusätzliche Mischwerkzeuge in der Blasensäule unterstützt und der Sauerstoffgehalt der inertisierten Monomerlösung überwacht.

Ein Beispiel für eine Inertisierung im Gleichstrom offenbart DE-A-35 40 994. Gemäß der Anmeldung wird das Inertgas über eine Wasserstrahlpumpe in die Monomerlösung eingesaugt.

Allen Verfahren ist gemeinsam, dass relativ große Inertgasmengen benötigt werden und dass die verwendeten Apparate aufgrund der hohen Polymerisationsneigung der inertisierten Monomerlösung leicht verstopfen, insbesondere bei längeren Kontaktzeiten zwischen Inertgas und Monomerlösung. Gemäß DE-A-35 40 994 sollte die Kontaktzeit daher auf maximal 20 Sekunden begrenzt sein (Seite 11, Absatz 2).

EP-A-1 097 946 weist nochmals daraufhin, dass das mit Sauerstoff angereicherte Inertgas vor der Polymerisation entfernt werden muss. Die Anmeldung schlägt dafür verschiedene Verfahren vor, beispielsweise Entgasung mit Ultraschall (Seite 9, Zeilen 34 bis 42).

EP-A-0 827 753 lehrt die Herstellung poröser wasserabsorbierender Polymere. Zur Herstellung der porösen Polymere wird eine mit viel Inertgas aufgeschäumte Monomerlösung polymerisiert. Zwangsläufig gelangt hierbei etwas mit Sauerstoff angereichertes Inertgas in den Polymerisationsreaktor.

All den aus dem Stand der Technik bekannten Verfahren zur Inertisierung der Monomerlösung liegt generell ein vergleichsweise hoher apparativer Aufwand zugrunde. Die Inertisierung der Monomerlösung stellt zumeist einen eigenen Verfahrensschritt dar. Darüber hinaus bedarf es noch einer Abgasleitung, über die das mit etwas Sauerstoff angereicherte Gasgemisch abführt wird. Neben dem hohen apparativen Aufwand stellt die erforderliche Inertgasmenge einen Kostenfaktor dar. Nachteilig erweist sich die Störanfälligkeit der Apparatur, da es durch die Entfernung des inhibitors Sauerstoff leicht zur vorzeitigen Polymerisation in der Apparatur selber oder in der Abgasleitung kommt.

Die WO-A-03/051940 offenbart die Herstellung besonders wenig verfärbter wasserabsorbierender Polymerpartikel. Gemäß der Anmeldung werden niedrig stabilisierte wässrige teilneutralisierte Acrylsäurelösungen polymerisiert Aufgrund der niedrigeren Stabilisierung ist die Polymerisationsneigung der Monomerlösung entsprechend erhöht.

Aufgabe der vorliegenden Erfindung war die Bereitstellung eines Verfahrens zur Herstellung nicht oder nur geringfügig verfärbter wasserabsorbierender Polymerpartikel, wobei die Polymerisationsneigung während der Inertisierung vermindert ist.

Eine weitere Aufgabe der vorliegenden Erfindung war die Bereitstellung eines verbesserten Verfahrens zur Herstellung wasserabsorbierender Polymerpartikel, dass das zur Inertisierung verwendete Inertgas optimal nutzt und wenig störanfällig ist.

Weiterhin sollte das erfindungsgemäße Verfahren auch für eine kontinuierliche Polymerisation geeignet sein.

Gelöst wurde die Aufgabe durch ein Verfahren zur Herstellung wasserabsorbierender Polymerpartikel, wobei eine Monomerlösung inertisiert und die inertisierte Monomerlösung in einen Polymerisationsreaktor überführt wird, dadurch gekennzeichnet, dass die Monomerlösung, bezogen auf das gelöste Monomer, von 0,001 bis 0,016 Gew.-% mindestens eines Polymerisationsinhibitors enthält und mindestens 50 Vol.-% des zur Inertisierung der Monomerlösung verwendeten Inertgases zusammen mit der inertisierten Monomerlösung in den Polymerisationsreaktor überführt werden.

Inertisierung und Polymerisation werden kontinuierlich durchgeführt.

Der Gehalt an Polymerisationsinhibitor, bezogen auf das gelöste Polymer, beträgt vorzugsweise 0,001 bis 0,013 Gew.-%, besonders bevorzugt 0,003 bis 0,007 Gew.-%, ganz besonders bevorzugt 0,004 bis 0,006 Gew.-%. Geeignete Polymerisationsinhibitoren sind alle Polymerisationsinhibitoren, die eine radikalische Polymerisation inhibieren und/oder verzögern können und eine ausreichende Löslichkeit aufweisen.

Die Polymerisation verzögern bedeutet, dass der Polymerisationsinhibitor mit einem Radikal zu einem Radikal mit geringerer Reaktivität als einem Monomerradikal reagiert.

Eine ausreichende Löslichkeit bedeutet, dass der Polymerisationsinhibitor in der Monomerlösung in der gewünschten Menge löslich ist.

Geeignete Inertgase sind alle Inertgase, die nicht in Radikalreaktionen eingreifen können, beispielsweise Stickstoff, Argon, Wasserdampf. Bevorzugtes Inertgas ist Stickstoff. Der Begriff "Inertgas" umfasst selbstverständlich auch Inertgasmischungen.

Das Inertgas sollte möglichst rein sein. Beispielsweise kann Stickstoff mit einem Stickstoffgehalt von vorzugsweise mindestens 99 Vol.-%, besonders bevorzugt mindestens 99,9 Vol.-%, ganz besonders bevorzugt mindestens 99,99 Vol.-% eingesetzt werden.

Das Inertgas wird über eine oder mehrere Zuleitungen zugeführt. Die Inertgaszuführungen können ringförmig um die Monomerleitung angeordnet sein.

Das zur Inertisierung verwendete Inertgas wird anschließend vorzugsweise zu mindestens 80%, besonders bevorzugt zu mindestens 90%, ganz besonders bevorzugt vollständig, zusammen mit der Monomerlösung in den Polymerisationsreaktor überführt.

Das Volumenverhältnis von Inertgas zu Monomerlösung beträgt vorzugsweise von 0,01 bis 10, besonders bevorzugt von 0,05 bis 7, ganz besonders bevorzugt von 0,1 bis 1,5.

Die Verweilzeit der Monomerlösung zwischen Inertgaszufuhr und Polymerisation beträgt vorzugsweise von 1 bis 120 Sekunden, besonders bevorzugt von 5 bis 60 Sekunden, ganz besonders bevorzugt von 10 bis 30 Sekunden.

Die Viskosität der Monomerlösung beträgt bei 15°C vorzugsweise von 5 bis 200 mPas, besonders bevorzugt von 10 bis 100 mPas, ganz besonders bevorzugt von 20 bis 50 mPas, wobei die Viskosität mit einem Brookfield -Viskosimeter (Spindel 2, 100 Upm) gemessen wird.

Die Monomerkonzentration in der Monomerlösung beträgt vorzugsweise von 10 bis 80 Gew.-%, besonders bevorzugt von 20 bis 60 Gew.-%, ganz besonders bevorzugt von 30 bis 50 Gew.-%.

Die Monomerlösung enthält mindestens ein einfach ethylenisch ungesättigtes Monomer, vorzugsweise Acrylsäure und/oder deren Salze. Der Anteil an Acrylsäure und/oder deren Salze an der Gesamtmonomermenge beträgt vorzugsweise mindestens 50 mol-%, besonders bevorzugt mindestens 90 mol-%, ganz besonders bevorzugt mindestens 95 mol-%.

In einer bevorzugten Ausführungsform der vorliegenden Erfindung wird das Inertgas über ein Venturi-Rohr dosiert.

Ein Venturi-Rohr ist eine in ihrer Länge begrenzte Rohrverengung, in der der Druckverlust weitgehend reversibel in kinetische Energie umgewandelt wird. Dazu wird die Querschnittsfläche F₁ auf der Strecke L₁ (Einlaufstrecke) auf den Querschnitt F₂ vermindert, die Querschnittsfläche F₂ wird auf der Strecke L₂ (Einschnürzone) konstant gehalten und anschließend wird die Querschnittsfläche F₂ auf der Strecke L₃ (Diffusor) wieder auf die Querschnittsfläche F₁ geweitet. Dabei ist die Querschnittsfläche F₁ größer als die Querschnittsfläche F₂ und die Länge L₃ größer als die Länge L₁.

Die Dosierung des Inertgases erfolgt vorzugsweise im Bereich der Strecke L₂ mit der Querschnittsfläche F₂.

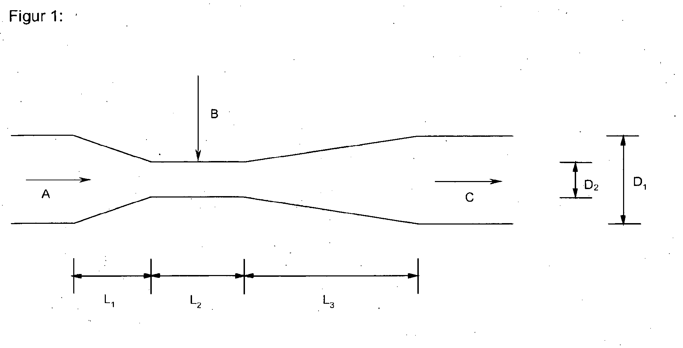

Die Figur 1 zeigt ein typisches Venturi-Rohr, wobei die Bezugszeichen die folgende Bedeutung haben:
- A:: Monomerlösung vor Inertgasdosierung
- B:: Inertgaszuführung
- C:: Monomerlösung und Inertgas
- L₁:: Einlaufstrecke
- L₂:: Einschnürzone
- L₃:: Diffusor
- D₁:: Durchmesser der Rohrleitung
- D₂:: Durchmesser der Einschnürzone

Die optimale Auslegung eines Venturi-Rohrs ist dem Fachmann an sich bekannt. Vorzugsweise wird das Venturi-Rohr so ausgelegt, dass der Druck im Bereich der Strecke L₂ weniger als der Umgebungsdruck beträgt (Saugförderung) und/oder das die Strömung im Bereich der Strecke L₂ turbulent ist, wobei die Reynolds-Zahl mindestens 1000, vorzugsweise mindestens 2000, besonders bevorzugt mindestens 3000, ganz besonders bevorzugt mindesten 4000, und üblicherweise weniger als 10.000.000 betragen sollte.

Wird ein Venturi-Rohr verwendet, so kann ein niedrigeres Volumenverhältnis von Inertgas zu Monomerlösung gewählt werden, vorzugsweise von 0,01 bis 7, besonders bevorzugt von 0,05 bis 5, ganz besonders bevorzugt von 0,12 bis 0,5.

Die Polymerisationsneigung läßt sich weiter vermindern, wenn die Verbindung zwischen Inertgaszuführung und Polymerisationsreaktor zumindest teilweise, vorzugsweise zumindest zu mindestens 50% der Fläche, besonders bevorzugt soweit konstruktiv möglich vollständig, eine Materialoberfläche aufweist, die gegenüber Wasser einen Kontaktwinkel von mindestens 60°, vorzugsweise mindestens 90°, besonders bevorzugt mindestens 100°, hat.

Der Kontaktwinkel ist ein Maß für das Benetzungsverhalten und wird gemäß DIN 53900 gemessen.

Geeignete Materialien mit entsprechendem Benetzungsverhalten sind Polyethylen, Polypropylen, Polyester, Polyamid, Polytetrafluorethylen, Polyvinylchlorid, Epoxidharze und Silikonharze. Ganz besonders bevorzugt ist Polypropylen.

Die wasserabsorbierenden Polymere werden beispielsweise durch Polymerisation einer Monomerlösung, enthaltend
a) mindestens ein ethylenisch ungesättigtes, säuregruppentragendes Monomer,
b) mindestens einen Vernetzer,
c) gegebenenfalls ein oder mehrere mit dem Monomeren a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,
erhalten.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere a), insbesondere Acrylsäure, enthalten vorzugsweise bis zu 0,016 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 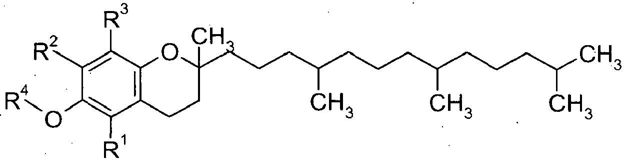 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und DE-A-103 31 450 beschrieben, gemischte Acrylate, die neben Acrylatgruppen weitere ethylenisch ungesättigte Gruppen enthalten, wie in DE-A-103 31 456 und WO-A-04/013064 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans, oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer b) beträgt vorzugsweise 0,01 bis 1 Gew.-%, besonders bevorzugt 0,05 bis 0,5 Gew.-%, ganz besonders bevorzugt 0,1 bis 0,3 Gew.-%, jeweils bezogen auf das Monomer a).

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Üblicherweise werden die Monomerlösungen vor der Polymerisation weitgehend von Sauerstoff befreit (Inertisierung), beispielsweise mittels Durchströmen mit einem inerten Gas, vorzugsweise Stickstoff. Dadurch werden die Polymerisationsinhibitoren in ihrer Wirkung deutlich abgeschwächt. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Grundpolymers sowie weitere geeignete hydrophile ethylenisch ungesättigte Monomere d) werden in DE-A-199 41 423, EP-A-0 686 650, WO-A-01/45758 und WO-A-03/104300 beschrieben.

Wasserabsorbierende Polymere werden üblicherweise durch Polymerisation einer wässrigen Monomerlösung und gegebenenfalls einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A-0 445 619, DE-A-19 846413)
- Polymerisation im Kneter, wobei durch beispielsweise gegenläufige Rührwellen kontinuierlich zerkleinert wird, (WO-A-01/38402)
- Polymerisation auf dem Band und anschließende Zerkleinerung im Fleischwolf, Extruder oder Kneter (DE-A-38 25 366, US-6,241,928)
- Emulsionspolymerisation, wobei bereits Perlpolymerisate relativ enger Gelgrößenverteilung anfallen (EP-A-0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO-A-02/94328, WO-A-02/94329)

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Die Neutralisation kann auch teilweise nach der Polymerisation auf der Stufe des Hydrogels durchgeführt werden. Es ist daher möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, je höher der Feststoffgehalt des Gels ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Das getrocknete Hydrogel wird vorzugsweise gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 800 µm, und vorzugsweise über 100 µm, besonders bevorzugt über 150 µm, ganz besonders bevorzugt über 200 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysilylverbindungen, Polyaziridine, Polyamine, Polyamidoamine, Di- oder Polyglycidylverbindungen, wie in EP-A-0 083 022, EP-A-543 303 und EP-A-937 736 beschrieben, di- oder polyfunktionelle Alkohole, wie in DE-C-33 14 019, DE-C-35 23 617 und EP-A-450 922 beschrieben, oder ß-Hydroxyalkylamide, wie in DE-A-102 04 938 und US-6,239,230 beschrieben.

Des weiteren sind in DE-A-40 20 780 zyklische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A- 103 34 584 bizyklische Amidacetale, in EP-A-1 199 327 Oxetane und zyklische Harnstoffe und in WO-A-03/031482 Morpholin-2,3-dion und dessen Derivate als geeignete Oberflächennachvernetzer beschrieben.

Die Nachvernetzung wird üblicherweise so durchgeführt, dass eine Lösung des O-berflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Das erfindungsgemäße Verfahren ermöglicht die wirtschaftliche kontinuierliche Herstellung nachvernetzter wasserabsorbierender Polymerpartikel. Die verwendeten Monomerlösungen können zuverlässig mit wenig Inertgas inertisiert werden. Die Polymerisationsneigung der inertisierten Monomerlösung vor dem Reaktor ist gering.

Ein weiterer Gegenstand der vorliegenden Erfindung ist eine Vorrichtung zur Durchführung des erfindungsgemäßen Verfahrens, umfassend
i) einen Polymerisationsreaktor,
ii) mindestens eine Zuleitung zum Polymerisationsreaktor i) und
iii) mindestens eine Zuleitung in die Zuleitung ii),
wobei die innere Oberfläche der Zuleitung ii) zwischen Polymerisationsreaktor i) und Zuleitung iii) zumindest teilweise gegenüber Wasser einen Kontaktwinkel von mindestens 60°, vorzugsweise mindestens 90°, besonders bevorzugt mindestens 100°, aufweist.

Der Randwinkel ist ein Maß für das Benetzungsverhalten und wird gemäß DIN 53900 gemessen.

Geeignete Materialien mit entsprechendem Benetzungsverhalten sind Polyethylen, Polypropylen, Polyester, Polyamid, Polytetrafluorethylen, Polyvinylchlorid, Epoxidharze und Silikonharze. Ganz besonders bevorzugt ist Polypropylen.

Die Länge der Zuleitung ii) zwischen Polymerisationsreaktor i) und Zuleitung iii) beträgt vorzugsweise von 0,5 bis 20 m, besonders bevorzugt von 1 bis 10 m, ganz besonders bevorzugt von 1,5 bis 5 m.

Der Querschnittsfläche der Zuleitung ii) beträgt von vorzugsweise von 10 bis 1000 cm², besonders bevorzugt von 25 bis 500 cm², ganz besonders bevorzugt von 50 bis 200 cm². Die Zuleitung ii) hat vorzugsweise einen kreisrunden Querschnitt.

In einer bevorzugten Ausführungsform liegt die Zuleitung iii) ringförmig um die Zuleitung ii), vorzugsweise senkrecht zur Flussrichtung. Der die gemeinsame Zwischenwand zwischen Zuleitung iii) und Zuleitung ii) weist Löcher auf, über die Inertgas in die Zuleitung ii) und damit in die Monomerlösung strömen kann. Die Anzahl der Löcher beträgt üblicherweise von 5 bis 500, vorzugsweise von 10 bis 100, besonders bevorzugt von 20 bis 50. Der Lochdurchmesser ist dabei so zu wählen, dass die Austrittsgeschwindigkeit des Inertgases üblicherweise mindestens 0,1 m/s, vorzugsweise mindestens 0,5 m/s, besonders bevorzugt mindestens 1 m/s, ganz besonders bevorzugt mindestens 1,5 m/s, beträgt. Austrittsgeschwindigkeiten über 10 m/s sind üblicherweise nicht erforderlich.

Die Löcher sind üblicherweise gleichmäßig nebeneinander angeordnet. Die Achse der Bohrungen weist vorzugsweise gegen die Förderrichtung der Monomerlösung, beispielsweise mit einem Winkel von 100 bis 140°, wodurch die Durchmischung unterstützt wird.

In einer besonders bevorzugten Ausführungsform ist die Zuführung iii) als Zwischenstück der Zuleitung ii) ausgebildet und kann zwischen eine Flanschverbindung eingesetzt werden.

In einer weiteren bevorzugten Ausführungsform ist die Zuleitung ii) an der Verbindung mit der Zuleitung iii) als Venturi-Rohr ausgebildet.

Das Venturi-Rohr weist, vorzugsweise im Bereich der Einschnürzone, ein oder mehrere Löcher auf, über die Inertgas in die Monomerlösung strömen kann. Die Anzahl der Löcher beträgt üblicherweise von 1 bis 20, vorzugsweise von 1 bis 10, besonders bevorzugt von 1 bis 5. Der Lochdurchmesser ist dabei so zu wählen, dass die Austrittsgeschwindigkeit des Inertgases üblicherweise mindestens 0,05 m/s, vorzugsweise mindestens 0,1 m/s, besonders bevorzugt mindestens 0,2 m/s, ganz besonders bevorzugt mindestens 0,3 m/s, beträgt. Austrittsgeschwindigkeiten über 1 m/s sind aufgrund der turbulenten Strömung üblicherweise nicht erforderlich.

Die Querschnittsfläche der Zuleitung ii) in der Einschnürzone wird um mindestens 20%, vorzugsweise mindestens 30%, besonders bevorzugt mindestens 40%, ganz besonders bevorzugt mindestens 50%, reduziert.

Das Verhältnis von Länge der Einschnürzone L₂ zu Länge der Einlaufstrecke L₁ beträgt vorzugsweise von 0,5 bis 20, besonders bevorzugt von 1 bis 10, ganz besonders bevorzugt von 2 bis 5, und/oder das Verhältnis von Länge der Einschnürzone L₂ zu Länge des Diffusors L₃ vorzugsweise von 0,1 bis 5, besonders bevorzugt von 0,5 bis 2,5, ganz besonders bevorzugt von 1 bis 2.

Die Vorrichtung ist vorzugsweise totraumfrei und die Oberflächen sollten eine möglichst geringe Rauhigkeit aufweisen.

Toträume sind Abschnitte der Vorrichtung in denen die durchschnittliche Verweilzeit beim bestimmungsgemäßen Betrieb erhöht ist.

Die erfindungsgemäßen Vorrichtungen sind hervorragend zur Inertisierung von Monomerlösungen geeignet. Speziell aufgrund ihrer speziellen inneren Oberfläche ist die Polymerisationsneigung gering.

### Beispiele

### Beispiel 1:

Stündlich wurden 17250 kg (14780 l/h) einer Monomerlösung, enthaltend 31,4 Gew.-% Natriumacrylat, 8,0 Gew.-% Acrylsäure, 0,0016 Gew.-% Hydrochinonmonomethylether und 0,65 Gew.-% Trimethylolpropan, mit 3 kg (2400 l/h) Stickstoff inertisiert. Die Viskosität der Monomerlösung betrug bei 15°C von 28 mPas. Die Oberflächenspannung der Monomerlösung betrug 0,04 N/m.

Zur Inertisierung wurde ein 93,2 cm langes Venturi-Rohr eingesetzt (Figur 1), wobei sich die Rohrleitung über eine Strecke von 8,4 cm von einen Durchmesser von 9 cm auf 3,6 cm verjüngte (Strecke L₁), über eine Strecke von 27,6 cm den Durchmesser von 3,6 cm beibehielt (Strecke L₂) und sich über eine Strecke von 57 cm wieder von einen Durchmesser von 3,6 cm auf 9 cm weitete (Strecke L₃).

Das Inertgas (>99 Vol.-% Stickstoff) wurde über zwei gegenüberliegenden Zuleitungen in der Mitte der Einschnürzone (Strecke L₂) zugeführt. Die Zuführungen hatten jeweils einen Innendurchmesser von 5 mm. Das Gas/Flüssigkeits-Gemisch wurde vollständig in den Polymerisationsreaktor überführt.

Der Abstand zwischen Stickstoffzuführung und Polymerisationsreaktor betrug 2 m. Die Verweilzeit des Gas/Flüssigkeits-Gemisches in der Leitung betrug ca. 3 Sekunden.

Inertisierung und Polymerisation liefen störungsfrei.

### Beispiel 2:

Stündlich wurden 17250 kg (14780 l/h) einer Monomerlösung, enthaltend 31,4 Gew.-% Natriumacrylat, 8,0 Gew.-% Acrylsäure, 0,0016 Gew.-% Hydrochinonmonomethylether und 0,65 Gew.-% Trimethylolpropan, mit 8 kg (6400 l/h) Stickstoff inertisiert. Die Viskosität der Monomerlösung betrug bei 10-15°C von 28-46 mPas. Die Oberflächenspannung der Monomerlösung betrug 0,04 N/m.

Die Monomerleitung hatte einen Durchmesser von 9 cm. In die Monomerleitung war ein Ring senkrecht zur Flussrichtung eingepasst, wobei der Innendurchmesser des Ringes dem Außendurchmesser der Monomerleitung entsprach. Der Ring hatte einen Innenquerschnitt von 13 mm.

Das Inertgas (>99 Vol.-% Stickstoff) wurde über 32 Löcher im Ring mit einem Lochdurchmesser von 1,8 mm der Monomerlösung zugeführt. Die Löcher waren gleichmäßig verteilt und waren in Richtung Ringmittelpunkt ausgerichtet. Das Gas/FlüssigkeitsGemisch wurde vollständig in den Polymerisationsreaktor überführt.

Der Abstand zwischen Stickstoffzuführung und Polymerisationsreaktor betrug 2 m. Die Verweilzeit des Gas/Flüssigkeits-Gemisches in der Leitung betrug ca. 3 Sekunden.

Inertisierung und Polymerisation liefen störungsfrei.

Aufgrund der geringen zur Inertisierung verwendeten Inertgasmenge enthält die Monomerlösung mehr gelösten Sauerstoff als im Stand der Technik üblich. Möglicherweise wird dadurch der geringere Gehalt an Hydrochinonmonomethylether kompensiert.

Gleichzeitig ist dadurch der Sauerstoffpartialdruck in der Gasphase relativ hoch. Da die Gasphase zusammen mit der Monomerlösung in den Polymerisationsreaktor gefördert wird, steht dieser Sauerstoff während des Transports der Monomerlösung in den Polymerisationsreaktor weiterhin zur Verfügung und Verringert die unerwünschte Polymerisation vor dem Polymerisationsreaktor. Aufgrund der großen Phasengrenzfläche beim Transport kann verbrauchter gelöster Sauerstoff schnell durch Diffusion aus der Gasphase ersetzt werden. Im Polymerisationsreaktor wird dann diese Diffusion aufgrund der deutlich geringeren Phasengrenzfläche erheblich zurückgedrängt.

## Patentansprüche

1. Verfahren zur Herstellung wasserabsorbierender Polymerpartikel, wobei eine Monomerlösung inertisiert und die inertisierte Monomerlösung in einen Polymerisationsreaktor überführt wird, **dadurch gekennzeichnet, dass** Inertisierung und Polymerisation kontinuierlich durchgerführt werden, die Monomerlösung, bezogen auf das gelöste Monomer, von 0,001 bis 0,016 Gew.-% mindestens eines Polymerisationsinhibitors enthält und mindestens 50 Vol.-% des zur Inertisierung der Monomerlösung verwendeten Inertgases zusammen mit der inertisierten Monomerlösung in den Polymerisationsreaktor überführt werden.

2. Verfahren gemäß Anspruch 1, **dadurch gekennzeichnet, dass** die innere Oberfläche der Verbindung zwischen Inertgaszuführung und Polymerisationsreaktor zumindest teilweise gegenüber Wasser einen Kontaktwinkel von mindestens 60° aufweist.

3. Verfahren gemäß Anspruch 1 oder 2, **dadurch gekennzeichnet, dass** das Volumenverhältnis von Inertgas zu Monomerlösung weniger als 10 beträgt.

4. Verfahren gemäß einem der Ansprüche 1 bis 3, **dadurch gekennzeichnet, dass** das Inertgas über ein Venturi-Rohr zugeführt wird und das Volumenverhältnis von Inertgas zu Monomerlösung von 0,01 bis 7 beträgt.

5. Verfahren gemäß einem der Ansprüche 1 bis 4, **dadurch gekennzeichnet, dass** die Verweilzeit der Monomerlösung zwischen Inertgaszuführung und Polymerisationsreaktor von 1 bis 120 Sekunden beträgt.

6. Verfahren gemäß einem der Ansprüche 1 bis 5, **dadurch gekennzeichnet, dass** die Viskosität der Monomerlösung bei 15°C von 5 bis 200 mPas beträgt.

7. Verfahren gemäß einem der Ansprüche 1 bis 6, **dadurch gekennzeichnet, dass** die Monomerkonzentration in der Monomerlösung von 10 bis 80 Gew.-% beträgt.

8. Verfahren gemäß einem der Ansprüche 1 bis 7, **dadurch gekennzeichnet, dass** mindestens 50 mol-% der Monomere der Monomerlösung Acrylsäure und/oder deren Salze sind.

9. Verfahren gemäß einem der Ansprüche 1 bis 8, **dadurch gekennzeichnet, dass** das Inertgas zu mindestens 99 Vol.-% aus Stickstoff besteht.

10. Verfahren gemäß einem der Ansprüche 1 bis 9, **dadurch gekennzeichnet, dass** die Monomerlösung im Polymerisationsreaktor zu einem Hydrogel polymerisiert, getrocknet, gemahlen und klassiert wird.

11. Verfahren gemäß Anspruch 10, **dadurch gekennzeichnet, dass** die klassierten Polymerpartikel oberflächennachvernetzt werden.

12. Vorrichtung zur Herstellung wasserabsorbierender Polymerpartikel gemäß einem der Ansprüche 1 bis 11, umfassend
i) einen Polymerisationsreaktor,
ii) mindestens eine Zuleitung zum Polymerisationsreaktor i) und
iii) mindestens eine Zuleitung in die Zuleitung ii),
wobei die innere Oberfläche der Zuleitung ii) zwischen Polymerisationsreaktor i) und Zuleitung iii) zumindest teilweise gegenüber Wasser einen Kontaktwinkel von mindestens 60° aufweist und der Polymerisationsreaktor ein Kneter oder ein Bandreaktor ist.

13. Vorrichtung gemäß Anspruch 12, **dadurch gekennzeichnet, dass** die Länge der Zuleitung ii) zwischen Polymerisationsreaktor i) und Zuleitung iii) von 0,5 bis 20 m beträgt.

14. Vorrichtung gemäß Anspruch 12 oder 13, **dadurch gekennzeichnet, dass** die Zuleitung iii) ringförmig um die Zuleitung ii) liegt und die gemeinsame Zwischenwand Löcher aufweist.

15. Vorrichtung gemäß Anspruch 14, **dadurch gekennzeichnet, dass** die gemeinsame Zwischenwand 5 bis 500 Löcher aufweist.

16. Vorrichtung gemäß Anspruch 12 oder 13, **dadurch gekennzeichnet, dass** die Zuleitung ii) an der Verbindung mit der Zuleitung iii) als Venturi-Rohr ausgebildet ist und die Zuleitung iii) in die Einschnürzone des Venturi-Rohrs mündet.

17. Vorrichtung gemäß Anspruch 16, **dadurch gekennzeichnet, dass** die Querschnittsfläche der Zuleitung ii) in der Einschnürzone um mindestens 20% reduziert wird.

18. Vorrichtung gemäß Anspruch 16 oder 17, **dadurch gekennzeichnet, dass** das Verhältnis von Länge der Einschnürzone L₂ zu Länge der Einlaufstrecke L₁ von 0,5 bis 20 und/oder das Verhältnis von Länge der Einschnürzone L₂ zu Länge des Diffusors L₃ von 0,1 bis 5 beträgt.

## Claims

1. A process for preparing water-absorbing polymer particles by inertizing a monomer solution and transferring the inertized monomer solution to a polymerization reactor, wherein inertization and polymerization are carried out continuously, the monomer solution, based on the dissolved monomer, comprises from 0.001 to 0.016% by weight of at least one polymerization inhibitor, and at least 50% by volume of the inert gas used to inertize the monomer solution is transferred into the polymerization reactor together with the inertized monomer solution.

2. The process according to claim 1, wherein the inner surface of the connection between inert gas feed and polymerization reactor at least partly has a contact angle for water of at least 60°.

3. The process according to claim 1 or 2, wherein the volume ratio of inert gas to monomer solution is less than 10.

4. The process according to any of claims 1 to 3, wherein the inert gas is fed through a Venturi tube and the volume ratio of inert gas to monomer solution is from 0.01 to 7.

5. The process according to any of claims 1 to 4, wherein the residence time of the monomer solution between inert gas feed and polymerization reactor is from 1 to 120 seconds.

6. The process according to any of claims 1 to 5, wherein the viscosity of the monomer solution at 15°C is from 5 to 200 mPas.

7. The process according to any of claims 1 to 6, wherein the monomer concentration in the monomer solution is from 10 to 80% by weight.

8. The process according to any of claims 1 to 7, wherein at least 50 mol% of the monomers of the monomer solution are acrylic acid and/or salts thereof.

9. The process according to any of claims 1 to 8, wherein the inert gas consists to an extent of at least 99% by volume of nitrogen.

10. The process according to any of claims 1 to 9, wherein the monomer solution is polymerized in the polymerization reactor to give a hydrogel, dried, ground and classified.

11. The process according to claim 10, wherein the classified polymer particles are surface postcrosslinked.

12. An apparatus for preparing water-absorbing polymer particles according to any of claims 1 to 11, comprising
i) a polymerization reactor,
ii) at least one inlet to the polymerization reactor i) and
iii)at least one inlet into the inlet ii),
where the inner surface of the inlet ii) between polymerization reactor i) and inlet iii) at least partly has a contact angle for water of at least 60° and the polymerization reactor is a kneader or a belt reactor.

13. The apparatus according to claim 12, wherein the length of the inlet ii) between polymerization reactor i) and inlet iii) is from 0.5 to 20 m.

14. The apparatus according to claim 12 or 13, wherein the inlet iii) encircles the inlet ii) and the common intermediate wall has holes.

15. The apparatus according to claim 14, wherein the common intermediate wall has from 5 to 500 holes.

16. The apparatus according to claim 12 or 13, wherein the inlet ii) is designed as a Venturi tube at the connection with the inlet iii) and the inlet iii) opens into the constriction zone of the Venturi tube.

17. The apparatus according to claim 16, wherein the cross-sectional area of the inlet ii) in the constriction zone is reduced by at least 20%.

18. The apparatus according to claim 16 or 17, wherein the ratio of length of the constriction zone L₂ to length of the narrowing zone L₁ is from 0.5 to 20 and/or the ratio of length of the constriction zone L₂ to length of the diffuser L₃ is from 0.1 to 5.

## Revendications

1. Procédé de fabrication de particules polymères absorbant l'eau, selon lequel une solution de monomères est inertisée et la solution de monomères inertisée est transférée dans un réacteur de polymérisation, **caractérisé en ce que** l'inertisation et la polymérisation sont réalisées en continu, la solution de monomères contient, par rapport au monomère dissous, de 0,001 à 0,016 % en poids d'au moins un inhibiteur de polymérisation et au moins 50 % en volume du gaz inerte utilisé pour l'inertisation de la solution de monomères sont transférés conjointement avec la solution de monomères inertisée dans le réacteur de polymérisation.

2. Procédé selon la revendication 1, **caractérisé en ce que** la surface intérieure de la connexion entre la conduite d'entrée de gaz inerte et le réacteur de polymérisation présente au moins en partie un angle de contact avec l'eau d'au moins 60°.

3. Procédé selon la revendication 1 ou 2, **caractérisé en ce que** le rapport volumique entre le gaz inerte et la solution de monomères est inférieur à 10.

4. Procédé selon l'une quelconque des revendications 1 à 3, **caractérisé en ce que** le gaz inerte est introduit par un tube Venturi et le rapport volumique entre le gaz inerte et la solution de monomères est de 0,01 à 7.

5. Procédé selon l'une quelconque des revendications 1 à 4, **caractérisé en ce que** le temps de séjour de la solution de monomères entre la conduite d'entrée de gaz inerte et le réacteur de polymérisation est de 1 à 120 secondes.

6. Procédé selon l'une quelconque des revendications 1 à 5, **caractérisé en ce que** la viscosité de la solution de monomères à 15 °C est de 5 à 200 mPas.

7. Procédé selon l'une quelconque des revendications 1 à 6, **caractérisé en ce que** la concentration de monomères dans la solution de monomères est de 10 à 80 % en poids.

8. Procédé selon l'une quelconque des revendications 1 à 7, **caractérisé en ce qu'**au moins 50 % en moles des monomères de la solution de monomères sont l'acide acrylique et/ou ses sels.

9. Procédé selon l'une quelconque des revendications 1 à 8, **caractérisé en ce que** le gaz inerte est constitué d'au moins 99 % en volume d'azote.

10. Procédé selon l'une quelconque des revendications 1 à 9, **caractérisé en ce que** la solution de monomères est polymérisée dans le réacteur de polymérisation en un hydrogel, séchée, broyée et classifiée.

11. Procédé selon la revendication 10, **caractérisé en ce que** les particules polymères classifiées sont postréticulées en surface.

12. Dispositif de fabrication de particules polymères absorbant l'eau selon l'une quelconque des revendications 1 à 11, comprenant :
i) un réacteur de polymérisation,
ii) au moins une conduite d'entrée dans le réacteur de polymérisation i) et
iii) au moins une conduite d'entrée dans la conduite d'entrée ii),
la surface intérieure de la conduite d'entrée ii) entre le réacteur de polymérisation i) et la conduite d'entrée iii) présentant au moins en partie un angle de contact avec l'eau d'au moins 60° et le réacteur de polymérisation étant un malaxeur ou un réacteur à bande.

13. Dispositif selon la revendication 12, **caractérisé en ce que** la longueur de la conduite d'entrée ii) entre le réacteur de polymérisation i) et la conduite d'entrée iii) est de 0,5 à 20 m.

14. Dispositif selon la revendication 12 ou 13, **caractérisé en ce que** la conduite d'entrée iii) est disposée sous forme annulaire autour de la conduite d'entrée ii) et la paroi intermédiaire commune comprend des trous.

15. Dispositif selon la revendication 14, **caractérisé en ce que** la paroi intermédiaire commune comprend 5 à 500 trous.

16. Dispositif selon la revendication 12 ou 13, **caractérisé en ce que** la conduite d'entrée ii) est configurée sous la forme d'un tube Venturi au niveau de la connexion avec la conduite d'entrée iii) et la conduite d'entrée iii) débouche dans la zone de rétrécissement du tube Venturi.

17. Dispositif selon la revendication 16, **caractérisé en ce que** la surface de section transversale de la conduite d'entrée ii) dans la zone de rétrécissement est réduite d'au moins 20 %.

18. Dispositif selon la revendication 16 ou 17, **caractérisé en ce que** le rapport entre la longueur de la zone de rétrécissement L₂ et la longueur de la section d'entrée L₁ est de 0,5 à 20 et/ou le rapport entre la longueur de la zone de rétrécissement L₂ et la longueur du diffuseur L₃ est de 0,1 à 5.
